# Europäisches Patentamt
# European Patent Office
# Office européen des brevets

(19)

(11) Veröffentlichungsnummer: **0 006 518**
**B1**

(12) **EUROPÄISCHE PATENTSCHRIFT**

(45) Veröffentlichungstag der Patentschrift: **15.04.81**

(51) Int. Cl.³: **B 29 D 27/02**

(21) Anmeldenummer: **79101868.2**

(22) Anmeldetag: **11.06.79**

(54) Mischkopf zum Herstellen eines schäumfähigen Reaktionsgemisches aus fliessfähigen Komponenten.

(30) Priorität: **29.06.78 DE 2828505**

(43) Veröffentlichungstag der Anmeldung:
**09.01.80 Patentblatt 80/1**

(45) Bekanntmachung des Hinweises auf die Patenterteilung:
**15.04.81 Patentblatt 81/15**

(84) Benannte Vertragsstaaten:
**AT BE CH DE FR GB IT LU NL**

(56) Entgegenhaltungen:
**BE - A - 703 752**
**DE - A - 2 405 228**
**US - A - 3 477 097**

(73) Patentinhaber: **BAYER AG**
**Zentralbereich Patente, Marken und Lizenzen**
**D-5090 Leverkusen 1, Bayerwerk (DE)**

(72) Erfinder: **Rudhart, Rudolf**
**Charlottenburger Strasse 65**
**D-5090 Leverkusen 1 (DE)**
Erfinder: **Schulte, Klaus**
**Opladener Strasse 5**
**D-5090 Leverkusen 1 (DE)**
Erfinder: **Dietrich, Werner, Dr.**
**Fürvelserstrasse 25**
**D-5000 Köln 80 (DE)**
Erfinder: **Decker, Heinz**
**Krohnstrasse 4**
**D-5000 Köln 51 (DE)**

Courier Press, Leamington Spa, England.

Mischkopf zum Herstellen eines schäumfähigen Reaktions-gemisches aus fließfähigen Komponenten

Die Erfindung richtet sich auf einen Mischkopf zum Herstellen eines schäumfähigen, vorzugsweise Polyurethan bildenden Reaktionsgemisches aus fließfähigen Komponenten, an dessen Mischkammerauslaß ein Verteilerstück mit mehreren Auslässen anschließt.

Es ist bereits bekannt, bei Anlagen zum kontinuierlichen Herstellen von Blockschaumstoff großer Breite an den Mischkammerauslaß ein sich zu mehreren Auslaßrohren verzweigendes Verteilerstück anzusetzen. Dieses Verteilerstück wird in der Fachsprache als "Geweih" bezeichnet (DE - OS 24 05 228).

Hierbei werden durch große Querschnitte zwar erhebliche Gemischmengen pro Zeiteinheit durchgesetzt; aber dennoch bestehen keine Schwierigkeiten mit der Verteilung. Insbesondere spielt die exakte Dosierung auf die verschiedenen Auslaufrohre keine Rolle, weil sich das fließfähige Gemisch noch auf der schiefen Ebene des Transportbandes der Schäumanlage von selbst gleichmäßig verteilt.

Es ist auch bekannt, bei der Herstellung einer Bodengruppe für Kraftfahrzeuge den von zwei Schalen eingeschlossenen, sehr unregelmäßig gestalteten Hohlraum mit einem Verteilerrohrsystem für das einzubringende Reaktionsgemisch auszustatten, um das Gemisch gleichzeitig an verschiedenen Punkten innerhalb des Hohlraumes einströmen zu lassen. Dieses Verteilerorgan ist nach außen mit einem Mischkopf verbindbar. Es ist vorzugsweise gleichzeitig als Verstärkungselement für die Deckschalen ausgebildet (US - PS 34 15 568).

Schließlich ist es auch noch bekannt, bei Mischköpfen, die mit Formwerkzeugen kombiniert sind, in der üblichen Weise der Gieß- und Spritztechnik den Angußkanal in Verteilkanäle aufzugliedern, die zu einzelnen Formnestern führen.

Keine der vorbekannten Vorrichtungen ermöglicht es jedoch, vorzugsweise offene Hohlräume mit sehr kleinen Gemischmengen zu beschicken.

Besteht beispielsweise die Aufgabe, Hohlblocksteine für das Bauwesen auszuschäumen, müssen relativ geringe Gemischmengen pro Zeiteinheit in die Hohlräume eingebracht werden. Die Einfüllmengen, können dabei je nach Größe des auszuschäumenden Hohlraumes zwischen 10 und 100 g betragen. Die auf dem Markt befindlichen kleinsten Schäummaschinen ermöglichen eine geringste Dosierzeit, im allgemeinen Schußzeit genannt, von 0,5 Sekunden. Legt man dabei eine Gemischmenge von 10 g zugrunde, so ergibt sich ein Gesamtausstoß von 1200 g pro Minute. Legt man weiterhin ein günstiges Verhältnis der Komponenten Polyol zu Isocyanat von 1 : 1 zugrunde, beträgt die Förderleistung jeder Pumpe 600 g pro Minute. Solche kleinen Mengen sind nur schlecht zu beherrschen, weil die Dosierung Schwierigkeiten bereitet und insbesondere die Vor- und Nachlaufabstimmung bei der Verarbeitung äußerst problematisch ist. Bei einer Gesamtschußzeit von 0,5 Sekunden bedeutet schon ein Vor- oder Nachlauf von wenigen Hundertstel Sekunden einen erheblichen Nachteil.

Die zu lösende Aufgabe besteht darin, einen Mischkopf zu finden, der eine gleichmäßige Verteilung des Gemisches auf mehrere Auslässe des Verteilerstückes auch in kleinsten Mengen gewährleistet.

Diese Aufgabe wird dadurch gelöst, daß das Verteilerstück aus einem Gehäuse besteht, das eine zentrisch zum Mischkammerauslaß ausgerichtete Kammer umschließt, in die ein Verbindungsrohr mündet, wobei hinter der Mündung im Gehäuse mehrere Auslaufbohrungen angeordnet sind, und daß gegenüber der Mündung ein auf einer Stellschraube angeordneter Verteilerkegel vorgesehen ist.

Dadurch wird erreicht, daß das durch das Verbindungsrohr aus der Mischkammer zuströmende Gemisch durch den Verteilerkegel gleichmäßig auf die verschiedenen Auslaufbohrungen verteilt wird. Die Einstellbarkeit des Kegels gewährleistet die Einstellung solch günstiger Strömungsverhältnisse, daß keinerlei Ablagerungen entstehen, durch die das Verteilerstück mit der Zeit zuwachsen würde.

Vorzugsweise ist die Mündung des Auslaufrohres mit einer trichterförmigen Aufweitung versehen, deren Öffnungswinkel dem Winkel des Verteilerkegels entspricht.

Diese Maßnahme dient der Verhinderung von Toträumen und begünstigt die Strömung.

Nach einer weiteren besonderen Ausführungsform weist der Verteilerkegel einen kegelringförmigen Absatz auf. Dieser dient der besseren Verteilung des Gemisches auf die einzelnen Auslaufbohrungen.

Die Auslaufbohrungen sind vorzugsweise parallel zu Mantellinien des Verteilerkegels ausgerichtet. Auch diese Maßnahme fördert den günstigen Strömungsverlauf.

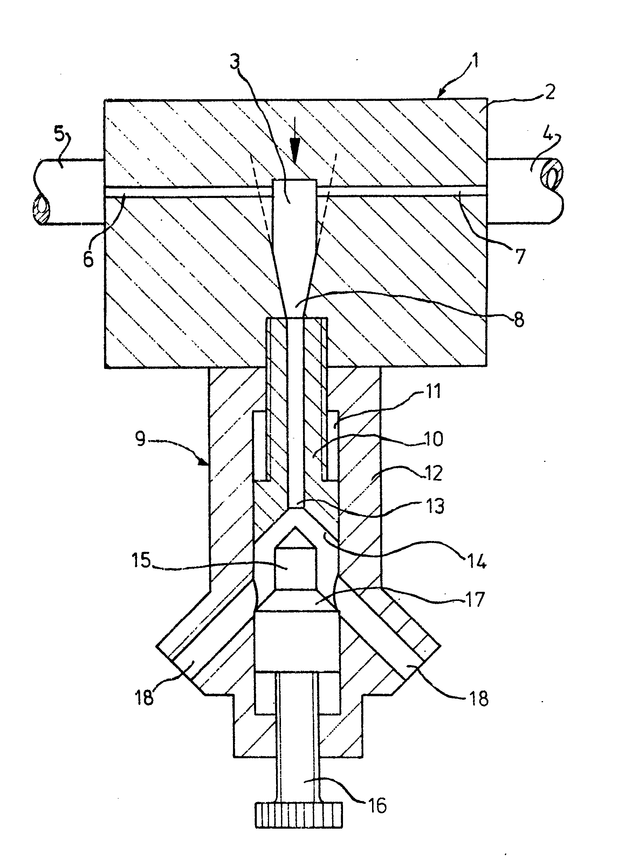

In der Zeichnung ist ein Ausführungsbeispiel dargestellt, wobei der eigentliche Mischkopf nur angedeutet ist; das erfindungsgemäße Verteilerstück jedoch ist rein schematisch im Schnitt dargestellt und nachstehend näher erläutert:

Der Mischkopf 1 besteht aus einem Gehäuse 2, das eine Mischkammer 3 umschließt, in welche die Komponentenzuleitungen, 4, 5 über Bohrungen 6, 7 münden. An den Auslaß 8 der Mischkammer 3 schließt ein Verteilerstück 9 mit einem Verbindungsrohr 10 an. Jenes ist in einer zentrischen Kammer 11 eines Gehäuses 12 längsverschiebbar geführt. Die Mündung 13 des Verbindungsrohres 10 ist mit einer trichterartigen Aufweitung 14 versehen. Ihr gegenüber ist ein Verteilerkegel 15 auf einer Stellschraube 16 angeordnet. Der Verteilerkegel 15 weist einen kegelringförmigen Absatz 17 auf. Im Gehäuse sind Auslaufbohrungen 18 angeordnet, an die nichtdargestellte Auslaufrohre anschließen, die zu den zu füllenden Hohlräumen weisen.

## Patentansprüche

1. Mischkopf zum Herstellen eines schäumfähigen, vorzugsweise Polyurethan bildenden Reaktionsgemisches aus fließfähigen Komponenten, an dessen Mischkammerauslaß ein Verteilerstück (9) mit mehreren Auslässen (18) anschließt, dadurch gekennzeichnet, daß das Verteilerstück (9) aus einem Gehäuse (12) besteht, das eine zentrisch zum Mischkammerauslaß ausgerichtete Kammer (11) umschließt, in die ein Verbindungsrohr (10) mündet, wobei hinter dessen Mündung (13) im Gehäuse (12) mehrere Auslaufbohrungen (18) angeordnet sind, und daß gegenüber der Mündung (13) ein auf einer Stellschraube (16) angeordneter Verteilerkegel (15) vorgesehen ist.

2. Mischkopf nach Anspruch 1, dadurch gekennzeichnet, daß die Mündung (13) des Verbindungsrohres (10) mit einer trichterförmigen Aufweitung (14) versehen ist, deren Öffnungswinkel dem Winkel des Verteilerkegels (15) entspricht.

3. Mischkopf nach den Ansprüchen 1 und 2, dadurch gekennzeichnet, daß der Verteilerkegel (15) einen kegelringförmigen Absatz (17) aufweist.

4. Mischkopf nach den Ansprüchen 1 bis 3, dadurch gekennzeichnet, daß die Auslaufbohrungen (18) parallel zu Mantellinien des Verteilerkegels (15) ausgerichtet sind.

## Claims

1. A mix head for the production of a foamable, preferably polyurethane-forming reaction mixture of fluid components, a distributor member (9) with a plurality of outlets (18) being attached to the mixing chamber outlet of said mix head, characterised in that the distributor member (9) consists of a housing (12) which encloses a chamber (11) which is centrally aligned with the mixing chamber outlet into which chamber (11) a connecting pipe (10) opens, behind the orifice (13) of which several outlet bores (18) are arranged in the housing (12) and in that a distributor cone (15) mounted on a set screw (16) is provided opposite the orifice (13).

2. A mix head according to claim 1, characterised in that the orifice (13) of the connecting pipe (10) is provided with a funnel-shaped widening (14), the opening angle of which corresponds to the angle of the distributor cone (15).

3. A mix head according to claims 1 and 2, characterised in that the distributor cone (15) has a tapered ring-shaped step (17).

4. A mix head according to claims 1 to 3, characterised in that the outlet bores (18) are aligned parallel to the surface lines of the distributor cone (15).

## Revendications

1. Tête mélangeuse pour la fabrication d'un mélange réactionnel capable de mousser, de préférence formant un polyuréthane, au départ de composants capables de couler, à la chambre de mélange de laquelle est attachée à sa sortie une pièce de distribution (9) à plusieurs sorties (18), caractérisée en ce que la pièce de distribution (9) consiste en un boîtier (12) qui entoure une chambre (11) orientée centralement par rapport à la sortie de la chambre de mélange, dans laquelle débouche un tube de raccordement (10) derrière l'embouchure duquel (13) sont agencés dans le boîtier (12) plusieurs forages de sortie (18), et en ce qu'en face de l'embouchure (13) est prévu un cône de distribution (15) monté sur une vis de réglage (16).

2. Tête mélangeuse selon la revendication 1, caractérisée en ce que l'embouchure (13) du tube de raccordement (10) est pourvue d'un évasement (14) en forme d'entonnoir, dont l'angle d'ouverture correspond à l'angle du cône de distribution (15).

3. Tête mélangeuse selon l'une quelconque des revendications 1 et 2, caractérisée en ce que le cône de distribution (15) présente un décrochement circulaire conique (17).

4. Tête mélangeuse selon l'une quelconque des revendications 1 à 3, caractérisée en ce que les forages de sortie (18) sont orientés parallèlement aux génératrices du cône de distribution (15).